# EUROPÄISCHE PATENTSCHRIFT

(11) **EP 2 445 730 B1**
(45) Veröffentlichungstag und Bekanntmachung des Hinweises auf die Patenterteilung: **24.04.2013**
(21) Anmeldenummer: 10732643.1
(22) Anmeldetag: 24.06.2010
(51) Int. Cl.: B60B 21/02, B60B 21/12, B60C 19/00

(54) **SCHALLABSORBER FÜR FAHRZEUGRÄDER**
SOUND ABSORBER FOR VEHICLE WHEELS
ABSORBEUR PHONIQUE POUR ROUES DE VÉHICULE

(30) Priorität: 25.06.2009 DE 102009030377
(43) Veröffentlichungstag der Anmeldung: 02.05.2012
(73) Patentinhaber: Fraunhofer-Gesellschaft zur Förderung der angewandten Forschung e.V., 80686 München (DE)
(72) Erfinder: BRANDSTÄTT, Peter, 73650 Winterbach (DE); BAY, Karlheinz, 70195 Stuttgart (DE); HERGET, Wolfgang, 09337 Hohenstein-Ernstthal (DE); MOLL, Werner, 70499 Stuttgart (DE)
(86) Internationale Anmeldenummer: PCT/EP2010/003799
(87) Internationale Veröffentlichungsnummer: WO 2010/149364

(56) Entgegenhaltungen:
- EP-A1- 1 055 527
- EP-A1- 1 428 686
- DE-A1- 10 220 193
- DE-A1- 19 801 570
- DE-A1- 19 820 590

## Beschreibung

### Technisches Gebiet

Die Erfindung betrifft einen Schallabsorber für Fahrzeugräder. Dieser dient dazu die im Reifenhohlraum zwischen Reifen und Felge entstehenden umlaufenden stehenden akustischen Wellen zu dämpfen. Ziel ist es, diesen Schallanteil in der Fahrzeugkabine und in der Umgebung zu vermindern.

### Stand der Technik

Zwischen der Felge, genauer gesagt dem Felgenbett, und dem Reifen ist der sogenannte Reifenhohlraum vorhanden. In diesem bildet sich ein Geräusch aus, das zum Gesamtgeräusch im Fahrzeuginnenraum und in der Umgebung beiträgt. Dieses Geräusch rührt vor allem durch vielfältige Anregungsarten auf das Rad her. Dadurch werden umlaufende stehende Wellen, sogenannte Torusmoden, im Reifenhohlraum ausgebildet.

Diese Schallwellen treten insbesondere bei Wellenlängen auf, die dem Umfang im Reifenhohlraum entsprechen. Die erste Torusmode tritt somit bei einer Wellenlänge auf, die etwa dem mittleren Umfang im Reifenhohlraum entspricht. Diese Torusmode und ihre harmonischen Oberschwingungen führen im Reifen zu einer erheblichen Schalldruckerhöhung. Es bildet sich ein Schall mit einem entsprechend markantem Frequenzspektrum aus. Zur Bedämpfung dieses Schalls ist aus der gattungsgemässen EP 1 574 360 A2 bekannt, Schaumstoff in den Hohlraum einzubringen. Aus der DE 102 20 193 A1 ist bekannt, in den Hohlraum mikroperforierte Absorberwände einzubringen. Nachteilig an diesen im Stand der Technik bekannten Lösungen ist, dass die Montage des Reifens auf der Felge erschwert wird. Dieses Problem wurde in DE 198 01 570 A1 durch einen Schallabsorber gelöst, der zumindest zum Teil außerhalb des Torusraumes des Reifens angeordnet ist und mit dem Torusraum in direkter Wirkverbindung steht. Die Wirkverbindung wird durch mindestens eine Durchgangsöffnung in der Felge realisiert. Als bevorzugte Ausführungsform des Schallabsorbers wird hier ein Helmholtzresonator angegeben. Eine ähnliche Lösung ist aus DE 198 05 270 A1 bekannt, hier wird ein Fahrzeugrad mit einer Einrichtung zur Geräuschreduktion beschrieben, das mindestens eine im oder am Rad angeordnete Luftkammer als Helmholtz-Resonator aufweist. In JP 2008-126806 A werden mehrere Luftkammern nebeneinander auf der Felge angeordnet.

Aus der EP 1 055 527 A1 ist eine Radfelge bekannt,die mit einem auf der Radfläche aufmontierbaren Reifen einen Hohlraum ausbildet. Längs der Umfangsfläche erstreckt sich ein schallabsorbierendendes Material, das an der Radfelge anliegt und unterhalb eines Flächengebildes angeordnet ist, das sich quer über die gesamte Breite des schallabsorbiierenden Materials erstreckt. In der Umfangsfläche ist eine vertiefte Aufnahme für das schallabsorbierende Material vorhanden. Damit kann erreicht werden, dass die Oberseite des Flächengebildes mit dem üblichen Verlauf einer Umfangfläche einer Felge übereinstimmt.

Aus der EP 1 428 686 A1 ist ebenfalls ein Felge bekannt, die mit einem auf der Radfläche aufmontierbaren Reifen einen Hohlraum ausbildet. Zur Dämpfung des sich in diesem Hohlraum ausbildenden Schalls sind auf der Innenseite des Hohlraums, also in dem der Felge zugewandten Bereich abgetrennte Bereiche angeordnet. In der Abtrennung zwischen dem Hohlraum und den abgetrennten Bereichen sind Löcher vorhanden, so dass der Schall aus dem Holhraum in die als Helmholtzresonatoren dienenden abgetrennten Bereiche gelangen kann und dort gedämpft wird.

Nachteilig an diesen bekannten Lösungen ist, dass für Helmholtz-Resonatoren in den zur Schallabsorbation von Fahrzeuggeräuschen erforderlichen Frequenzbereichen großvolumige Luftkammern benötigt werden, um eine gute Dämpfung zu erreichen. Diese Luftkammern können die Stabilität der Felge und/oder das stabile, ruhige Fahrverhalten des Fahrzeuges gefährden. Sind die Helmholtzresonatoren zu klein dimensioniert, so erweist sich die resultierende Dämpfung als unbefriedigend. Auch bei Verwendung von Absorbern mit Dämpfungsmaterial besteht ein hoher Platzbedarf. Darüber hinaus treten beim Dämpfungsmaterial Zentrifugalkräfte auf, die das Gefüge des Dämpfungsmaterials zerstören können.

### Beschreibung

Aufgabe der vorliegenden Erfindung ist es, einen Schallabsorber für Fahrzeugräder anzugeben, der Nachteile des Stands der Technik überwindet. Lösungen sind im unabhängigen Anspruch angegeben. Vorteilhafte Weiterbildungen finden sich in den Unteransprüchen.

Für Fahrzeugräder, welche eine Felge haben, auf die ein Reifen montierbar ist, wird ein Schallabsorber mit nachfolgendem Aufbau vorgeschlagen. In die Felge wird ein Hohlraum als Absorptionsvolumen integriert, wobei ein für die Montage des Reifens gewünschtes Außenprofil erhalten bleibt, indem wie bei konventionellen Rädern ohne Absorptionsvolumen außer in Randbereichen des Felgenbetts keine Erhebungen vorhanden sind, welche die Montage des Reifens erschweren würden. Unter dem Außenprofil ist dabei dasjenige Profil zu verstehen, über das der Reifen auf die Felge montiert wird. Kennzeichnend ist, dass der Schallabsorber als mikroperforierter Schallabsorber ausgebildet ist. Die aus dem Stand der Technik bekannten Lösungen hingegen sehen Schallabsorber vor, welche in den radial vom Felgenbett nach außen weisenden Raum hineinragen oder als Helmholtzresonatoren ausgebildet sind. Es ist selbstverständlich, dass kleinere Erhebungen durchaus hingenommen werden können, solange die Montage des Reifens nicht unangemessen erschwert wird. In Randbereichen des Felgenbetts wird auch bei den Fahrzeugrädern mit erfindungsgemäßen Schallabsorbern eine dem Stand der Technik gemäße Erhebung bleiben. Diese Erhebung kann dazu dienen, den montierten Reifen auf der Felge zu stabilisieren und sein Abrutschen zu verhindern. So liegt der Reifen in der Regel zwischen einem umlaufenden erhöhten Rand und einer umlaufenden Erhebung auf und ist damit in einer leichten Versenkung stabilisiert. Durch die Erfindung wird somit ein Schallabsorber vorgestellt, der die Montage des Reifens auf die Felge weiterhin ermöglicht und zudem gute Eigenschaften zur Schallabsorption aufweist.

Das Konzept der mikroperforierten Absorber ist etwa aus Fuchs, H.V.; Zha, X.; Zhou, X.: Schallabsorber und Schalldämpfer. Innovatorium für Maßnahmen zur Lärmbekämpfung und Raumakustik. Teil 5: Mikroperforierte Bauteile. Bauphysik 25 (2003), H. 2, S. 80-88. und aus Brandstätt, P.; Bay, K.; Rambausek, N.: Mehrkammer-Rohrschalldämpfer mit Mikroperforation. DAGA 07 in Stuttgart, DEGA, 2007, S. 929-930, CD-Rom, bekannt. Beim Einsatz mikroperforierter Absorber im Rahmen der vorliegenden Erfindung ist die Fläche zwischen dem Absorptionsvolumen und dem Reifenhohlraum durch ein mikroperforiertes Gebilde getrennt. Ein mikroperforierter Schallabsorber hat bei diesem Absorberaufbau mehrere Vorteile. In der Regel kann mit einem mikroperforierten Schallabsorber bei einem kleineren Absorptionsvolumen als bei konventionellen Schallabsorbern, wie Helmholtzresonatoren oder mit Dämpfungsmaterial gefüllten Resonatoren, die gewünschte Dämpfung in einem vorgegebenen Frequenzband erreicht werden. Entsprechend kann bei gegebenem Absorptionsvolumen dabei eine bessere Dämpfung erreicht werden. Auch wenn die Dichte und damit das Gewicht von konventionellen Dämpfungsmaterialien nicht besonders hoch ist, so sind doch die auf das Dämpfungsmaterial wirkenden Fliehkräfte bei höheren Fahrtgeschwindigkeiten, welche mit entsprechend höheren Umdrehungsgeschwindigkeiten der Räder einhergehen, nicht gänzlich vernachlässigbar. Dieses Problem entfällt bei mikroperforierten Schallabsorbern, da das Absorptionsvolumen mit Luft gefüllt sein kann. Es ist lediglich zu gewährleisten, dass das mikroperforierte Gebilde selbst den Fliehkräften standhält.

Es sind vielfältige Ausgestaltungen des Schallabsorbers und des Absorptionsvolumens denkbar. Eine Möglichkeit zur Realisierung eines mikroperforierten Schallabsorbers besteht darin, dass in das Felgenbett selbst eine Mikroperforation eingebracht ist und auf der dem Reifenhohlraum abgewandten Seite des Felgenbetts ein als Absorptionsvolumen dienendes Luftvolumen vorhanden ist. Dabei kann es sich um eine Kammer handeln, welche abgesehen von der Mikroperforation einigermaßen oder gänzlich abgeschlossen sein sollte. Da ein Perforationsgrad oder Lochflächenanteil von circa einem Prozent ausreichend ist, ergeben sich keine nennenswerten Einschränkungen der Stabilität der Felge.

Eine weitere Möglichkeit einen mikroperforierten Schallabsorber auszubilden ergibt sich, indem ein mikroperforiertes Gebilde das Außenprofil der Felge bildet und das Felgenbett beabstandet angeordnet ist, so dass sich zwischen dem Felgenbett und dem mikroperforierten Gebilde das Absorptionsvolumen ausbildet. Unter dem Felgenbett ist somit hier das Stabilität verleihende Bauteil zu verstehen und nicht mehr das Felgenbett im ursprünglichen Sinne, welche das Außenprofil bildet, auf das der Reifen montiert wird. Das mikroperforierte Gebilde wird in der Regel ein dünnes Blech sein, welches mit dem Felgenbett im Randbereich des Absorptionsvolumens verbunden ist. Dabei ist lediglich zu gewährleisten, dass das mikroperforierte Gebilde bei der Montage des Reifens nicht beschädigt wird. Im Übrigen sind keine mechanischen Anforderungen an das mikroperforierte Gebilde zu stellen. Insbesondere ist der Luftdruck auf beiden Seiten des mikroperforierten Gebildes nahezu gleich, sieht man vom Schalldruck einmal ab, so dass das mikroperforierte Gebilde keinen Kräften aufgrund von Druckdifferenzen ausgesetzt ist. Diese Kräfte wirken auf das Felgenbett, welches das Absorptionsvolumen auf der radial nach innen gewandten Seite abschließt. Dies ist aber beim Felgenbett stets der Fall, so dass keine zusätzlichen Kräfte berücksichtigt werden müssen. Darüber hinaus hat das Felgenbett unverändert die Aufgabe, zur Gesamtstabilität der Felge beizutragen. Abgesehen vom anderen räumlichen Verlauf des Felgenbetts sind bei dieser Ausführungsform der Erfindung an das Felgenbett keine anderen Anforderungen zu stellen als bei den im Stand der Technik bekannten Felgenbetten. Ein weiterer Vorteil dieser Ausführungsform der Erfindung ist, dass die Mikroperforation nicht in das stabile und damit schwerer bearbeitbare Felgenbett selbst eingebracht werden muss.

Wie bereits vermerkt, ist der Lochflächenanteil, auch Perforationsgrad genannt, in der Größenordnung von 1%. Das bedeutet, dass im Bereich der Bohrungen die Löcher circa 1 % der Fläche ausmachen. Dies ist zur Erreichung der akustischen Wirkung ausreichend, während die Stabilität der gelochten Gebilde praktisch nicht beeinträchtigt wird.

In einer weiteren Ausführungsform der Erfindung ist das sich ausbildende torusförmige Absorptionsvolumen durch Stege unterteilt, sodass ein kassettiertes Absorptionsvolumen entsteht. Ein solches kassettiertes Absorptionsvolumen hat insbesondere bei einem mikroperforierten Schallabsorber deutliche Vorteile. Der durch die Mikroperforation vom Reifenhohlraum in das Absorptionsvolumen übertragene Schalldruck kann sich auf Grund der Kassettierung nicht mehr längs des Umfangs des Absorptionsvolumens ausbreiten. Die Ausbreitung längs des Absorptionsvolumens könnte ohne Stege einigermaßen ungestört verlaufen. Eine im Reifenhohlraum umlaufende Schallwelle würde somit eine im Absorptionsvolumen nahezu gleichgeschaltete, umlaufende Schallwelle hervorrufen. Damit wäre aber der Dämpfungseffekt reduziert.

In einer weiteren Ausführungsform der Erfindung sind die geometrischen Abmessungen des Absorptionsvolumens auf die zu dämpfenden Frequenzen abgestimmt. Dies geschieht zum einen, indem für die Stege, welche die Kassettierung des Absorptionsvolumens bewirken, ein geeigneter Abstand gewählt wird. Im Weiteren trägt die Tiefe und Breite des Absorptionsvolumens und die Dicke des mikroperforierten Bauteils zur Abstimmung des mikroperforierten Absorbers auf die Schalldämpfungsanforderungen bei. Hierbei sind freilich die geometrischen Vorgaben der Felgengröße zu beachten.

### Beispiele

Ohne Einschränkung der Allgemeinheit wird die Erfindung anhand von Figuren nachfolgend näher beschrieben.
- Figur 1: zeigt eine schematische Darstellung des Querschnitts einer aus dem Stand der Technik bekannten Tiefbettfelge;
- Figur 2: zeigt den Querschnitt einer Tiefbettfelge mit integrierter Mikroperforation und Einbau der Kammer für das Absorptionsvolumen;
- Figur 3: zeigt eine Abwandlung von Figur 2 mit einem größeren Absorptionsvolumen;
- Figuren 4a bis 4c: zeigen den schematischen Aufbau der das Absorptionsvolumen bildenden ringförmigen Kammer und eine vereinfachte Darstellung ihrer Montage in die Felge;
- Figur 5: zeigt den Querschnitt einer modifizierten Kontur der Tiefbettfelge mit einer mikroperforierten Platte vor dem Absorptionsvolumen;
- Figuren 6 und 7: zeigen mögliche Abwandlungen von Figur 5;
- Figuren 8a und 8b: zeigen eine schematische Darstellung der Wirkung einer Kassettierung im Absorptionsvolumen.
- Figur 9: zeigt den gemessenen Geräuschpegel in einem Fahrzeug, das mit 90 km/h rollt (keine Motorengeräusche), gemessen am Ohr das Beifahrers einmal mit Serienfelge und einmal mit Absorberfelge

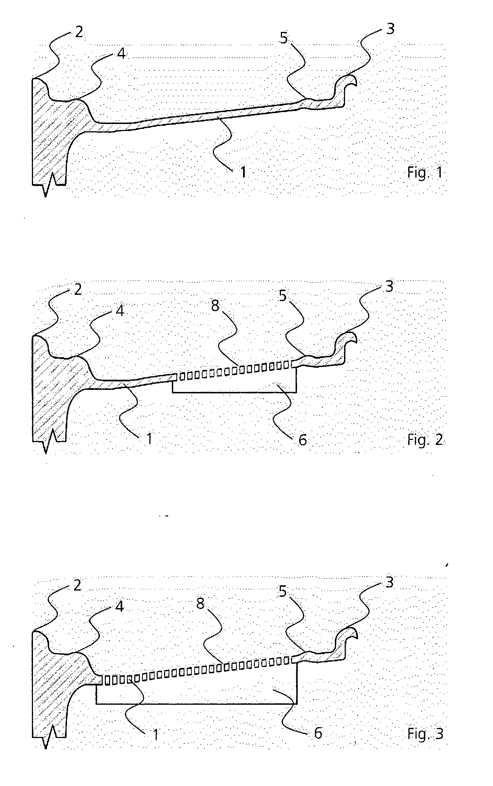

In Figur 1 ist eine Tiefbettfelge gezeigt. Erkennbar ist der innere Rand 2 und der äußere Rand 3. Ferner ist die innere Erhebung 4 und die äußere Erhebung 5 ersichtlich. Zur Montage wird der Reifen über den inneren Rand 2 gezogen und durch Drehung und Ansetzen eines Werkzeugs wird bewirkt, dass der Reifen über die Tiefbettfelge gezogen wird. Der Reifen wird sodann stabilisiert, indem er in den Rillen, welche zwischen dem äußeren Rand 3 und der äußeren Erhebung 5 sowie dem inneren Rand 2 und der inneren Erhebung 4 verlaufen. In Figur 2 ist die Kammer 6 gezeigt. Die Kammer 6 umschließt ein Luftrückvolumen, welches als Absorptionsvolumen dient. Im Felgenbett 1 sind im Bohrungsbereich 8 der Kammer 6 Bohrungen eingebracht, welche die Mikroperforation ausbilden. Die einzelnen Bohrungen haben dabei einen Durchmesser bis etwa 1 mm. Der Abstand zwischen den Löchern kann etwa 3 bis 30 mm betragen, sodass sich ein Lochflächenanteil von deutlich weniger als einem Prozent oder etwa einem Prozent ergibt. Der geringe Durchmesser der Löcher und der geringe Lochflächenanteil haben den Vorteil, dass durch die Mikroperforation die mechanische Stabilität der Tiefbettfelge 1 nur unwesentlich beeinträchtigt wird. Figur 3 zeigt eine Ausführungsform mit einer größeren Kammer 6 für das Luftrückvolumen. Eine solche größere Kammer ist zu wählen, wenn beispielsweise tiefere Frequenzen zu bedämpfen sind. Die Kammertiefe ist dabei ein Parameter für die Abstimmung.

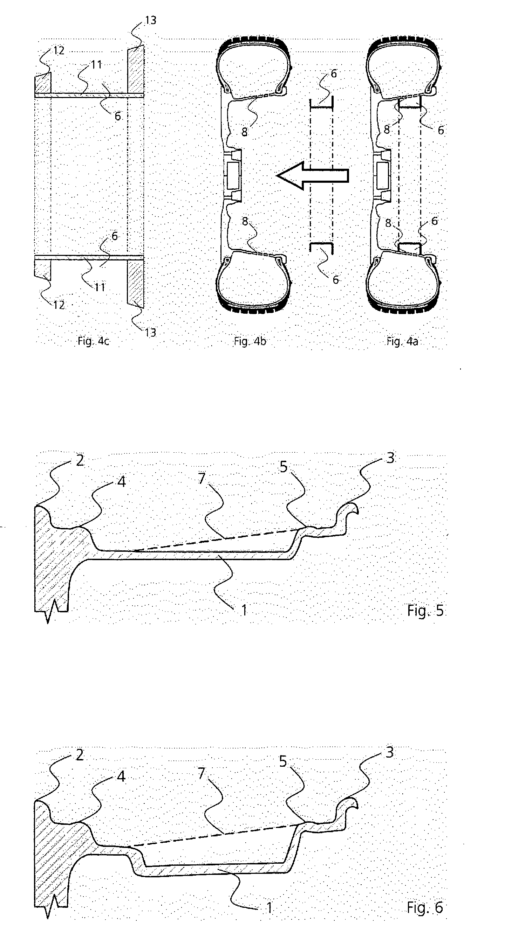

In Figur 4a bis 4c ist der schematische Aufbau der ringförmigen Kammer dargestellt. Danach wird die ringförmige Kammer durch ein Rundblech begrenzt. Das Rundblech stellt zugleich die Rückwand 11 des Absorptionsvolumens 6 dar. Am Rundblech befindet sich eine innere ringförmige Kammerwand 12 und eine äußere ringförmige Kammerwand 13. Die innere ringförmige Kammerwand 12 erstreckt sich von einem Ende des Rundblechs radial nach außen. Die äußere ringförmige Kammerwand 13 erstreckt sich vom anderen Ende des Rundblechs radial nach außen. Die äußere ringförmige Kammerwand 13 erstreckt sich radial weiter nach außen als die innere ringförmige Kammerwand 12. Ferner sind die radial außen liegenden Enden der beiden ringförmigen Kammerwände 12 und 13 schräg, so dass die radiale Erstreckung vom äußeren Ende der äußeren ringförmigen Kammerwand 13 bis zum inneren Ende der inneren ringförmigen Kammerwand 12 kontinuierlich abnimmt. Wie aus Figur 4b ersichtlich, wird der Aufbau aus Rundblech und innerer Kammerwand 12 sowie äußerer Kammerwand 13 in Pfeilrichtung in die Felge eingesetzt. Wie in Figur 4c ersichtlich wird die ringförmige Kammer 6 für das Luftrückvolumen durch die vom Rundblech gebildete Rückwand 11, die beiden ringförmigen Kammerwände 12 und 13 sowie den Bohrungsbereich 8 der Tiefbettfelge umgeben.

In Figur 5 ist eine andere Ausführungsform gezeigt. Der Verlauf der Tiefbettfelge ist gegenüber den aus dem Stand der Technik bekannten Tiefbettfelgen verändert. Das Felgenbett 1 verläuft in weiten Bereichen radial weiter innen als bei den im Stand der Technik bekannten Felgen. Eine mikroperforierte Platte 7 verläuft ähnlich wie das Felgenbett 1 bei konventionellen Tiefbettfelgen. Damit bleibt das Außenprofil der Felge weitgehend unverändert. Der Raum zwischen Felgenbett 1 und mikroperforierter Platte 7 dient als Absorptionsvolumen 6.

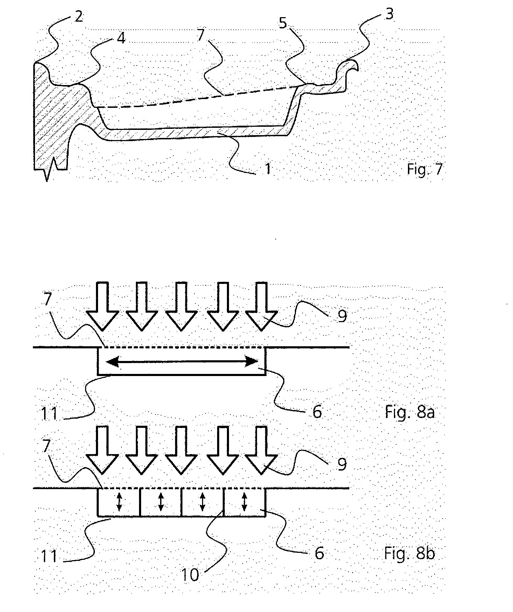

Die Figuren 6 und 7 zeigen veränderte Ausführungsformen, die sich von der in Figur 5 gezeigten Ausführungsform durch die Größe des ausgebildeten Absorptionsvolumens unterscheiden. Sie ermöglichen damit die Abstimmung auf unterschiedliche Frequenzbereiche und die Wahl der Konstruktion nach den mechanischen und akustischen Anforderungen.

Anhand von Figur 8b wird der Vorteil einer Kassettierung des als Absorptionsvolumen dienenden Luftrückvolumens deutlich gemacht. Der Schall 9, dargestellt durch die Pfeile, trifft auf die mikroperforierte Oberfläche 7. In einer nicht kassettierten Kammer nach Figur 8a kann sich der Schall, wie durch den Pfeil angedeutet, in Längsrichtung der Kammer 6 ungehindert ausbreiten. Bei der in Figur 8b hingegen gezeigten kassettierten Kammer 6, welche durch Stege 10 unterbrochen ist, verlaufen die Schallwellen zwischen der mikroperforierten Oberfläche 7 und der dieser gegenüberliegenden Rückwand 11 wie durch die Pfeile dargestellt. Damit kann eine zusätzliche Dämpfung des Schalls erfolgen.

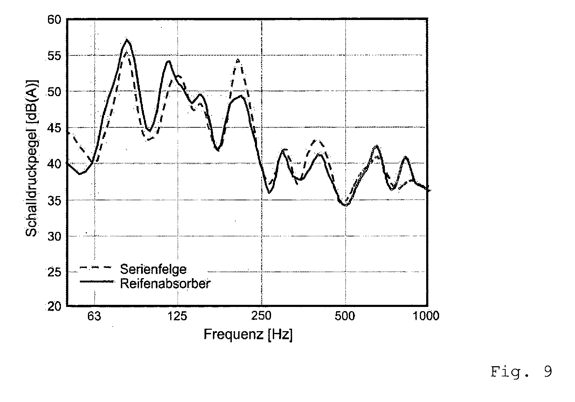

Figur 9 zeigt den gemessenen Schalldruckpegel in einem Fahrzeug, das mit 90 km/h rollt (keine Motorengeräusche), gemessen am Ohr das Beifahrers einmal mit Serienfelge (gestrichelte Linie) und einmal mit erfindungsgemäßer Absorberfelge (durchgezogene Linie). Zur Messung wurde das Fahrzeug auf einen Rollenprüfstand im Freifeldmessraum gebracht. Die Rollen wurden extern so angetrieben, dass die Fahrgeräusche bei einer Geschwindigkeit von 90 km/h angeregt wurden. Im Vergleich zur Praxis fehlen Motorengeräusche und Windgeräusche. Der in den Felgen eingesetzte Absorber ist auf den Bereich 200 Hz abgestimmt und zeigt dort die beste Wirkung, das heißt die deutlichste Pegelminderung. Die Dämpfung in diesem Bereich trägt nicht nur zur Reduktion des Schallpegels insgesamt bei. Diese Dämpfung führt vor allem auch dazu, dass den Insassen im Fahrzeug ein komfortableres Fahrzeuggeräusch vermittelt wird. Insbesondere im Bereich der Oberklasse von Fahrzeugen wird Wert darauf gelegt, dass das Fahrzeuggeräusch im Innenraum nicht nur insgesamt niedrig ist, sondern auch von seiner Charakteristik als angenehm empfunden wird. Ebendies wird durch die Dämpfung des Peaks bei 200 Hz erreicht.

### Bezugszeichenliste

| | |
|---|---|
| 1 | Felgenbett |
| 2 | Innerer umlaufender Rand |
| 3 | Äußerer umlaufender Rand |
| 4 | Innere umlaufende Erhebung |
| 5 | Äußere umlaufende Erhebung |
| 6 | Kammer für Luftrückvolumen |
| 7 | Mikroperforierte Platte |
| 8 | Bohrungsbereich der Tiefbettfelge |
| 9 | Auf mikroperforierte Oberfläche einwirkendes Schallfeld |
| 10 | Stege zur Kassettierung der Kammer des Luftrückvolumens |
| 11 | Rückwand des Luftrückvolumens |
| 12 | Innere ringförmige Kammerwand |
| 13 | Äußere ringförmige Kammerwand |

## Patentansprüche

1. Schallabsorber für Fahrzeugräder, aufweisend eine Felge, auf die ein Reifen montierbar ist, und bei denen in die Felge ein Absorptionsvolumen (6) integriert ist, wobei ein für die Montage des Reifens gewünschtes Außenprofil erhalten bleibt, indem außer in Randbereichen der Felge keine Erhebungen vorhanden sind, welche die Montage des Reifens erschweren, **dadurch gekennzeichnet, dass** der Schallabsorber als mikroperforierter Schallabsorber (7) ausgebildet ist.

2. Schallabsorber nach Anspruch 1, **dadurch gekennzeichnet, dass** in das Felgenbett (1) eine Mikroperforation (8) eingebracht ist und auf der dem Reifenhohlraum abgewandten Seite ein als Absorptionsvolumen dienendes Luftvolumen (6) vorhanden ist.

3. Schallabsorber nach einem der Ansprüche 1 oder 2, **dadurch gekennzeichnet, dass** im Bereich des Absorptionsvolumens (6) ein mikroperforiertes Gebilde (7), insbesondere ein Blech, das Außenprofil der Felge bildet und das Felgenbett (1) beabstandet angeordnet ist, sodass sich zwischen Felgenbett (1) und mikroperforiertem Gebilde (7) das Absorptionsvolumen ausbildet.

4. Schallabsorber nach einem der vorhergehenden Ansprüche, **dadurch gekennzeichnet, dass** der Lochflächenanteil des mikroperforierten Schallabsorbers (7) weniger als etwa 1 % beträgt.

5. Schallabsorber nach einem der vorhergehenden Ansprüche, **dadurch gekennzeichnet, dass** das Absorptionsvolumen (6) längs des Umfangs durch Stege (10) unterteilt ist, sodass ein kassettiertes Absorptionsvolumen entsteht.

6. Schallabsorber nach einem der vorhergehenden Ansprüche, **dadurch gekennzeichnet, dass** die geometrischen Abmessungen des mikroperforierten Gebildes (7) und/oder des Absorptionsvolumens (6) auf die zu dämpfenden Schallfrequenzen abgestimmt sind.

## Claims

1. Sound absorber for vehicle wheels, comprising a rim, onto which a tyre can be fitted, and in which an absorption volume (6) is integrated in the rim, while retaining an outer profile desired for the fitting of the tyre, by providing that only in edge regions of the rim are there raised areas that would otherwise hinder the fitting of the tyre, **characterized in that** the sound absorber is formed as a microperforated sound absorber (7).

2. Sound absorber according to Claim 1, **characterized in that** a microperforation (8) is incorporated in the rim base (1) and a volume of air (6) serving as an absorption volume is present on the side facing away from the tyre cavity.

3. Sound absorber according to either of Claims 1 and 2, **characterized in that**, in the region of the absorption volume (6), a microperforated formation (7), in particular a metal sheet, forms the outer profile of the rim and the rim base (1) is arranged some distance away, so that the absorption volume is formed between the rim base (1) and the microperforated formation (7).

4. Sound absorber according to one of the preceding claims, **characterized in that** the proportion of the surface area of the microperforated sound absorber (7) that is taken up by holes is less than approximately 1%.

5. Sound absorber according to one of the preceding claims, **characterized in that** the absorption volume (6) is subdivided along the circumference by webs (10), so that a compartmentalized absorption volume is created.

6. Sound absorber according to one of the preceding claims, **characterized in that** the geometrical dimensions of the microperforated formation (7) and/or of the absorption volume (6) are made to match the sound frequencies to be damped.

## Revendications

1. Isolant acoustique pour roues de véhicule, présentant une jante, sur laquelle peut être monté un pneu, un volume absorbant (6) étant intégré dans la jante, un profilé extérieur souhaité pour le montage du pneu étant conservé, en ce qu'aucun rehaussement n'est prévu à l'extérieur dans les régions de bord de la jante, ces rehaussements rendant plus difficile le montage du pneu, **caractérisé en ce que** l'isolant acoustique est réalisé sous forme d'isolant acoustique microperforé (7).

2. Isolant acoustique selon la revendication 1, **caractérisé en ce qu'**une microperforation (8) est pratiquée dans le lit de jante (1) et un volume d'air (6) servant de volume d'absorption est prévu du côté opposé à la cavité du pneu.

3. Isolant acoustique selon l'une quelconque des revendications 1 ou 2, **caractérisé en ce que** dans la région du volume d'absorption (6) une structure microperforée (7), en particulier une tôle, forme le profilé extérieur de la jante et est disposée à distance du lit de jante (1), de telle sorte qu'entre le lit de jante (1) et la structure microperforée (7) soit constitué le volume d'absorption.

4. Isolant acoustique selon l'une quelconque des revendications précédentes, **caractérisé en ce que** la proportion de surface des trous de l'isolant acoustique microperforé (7) est inférieure à environ 1 %.

5. Isolant acoustique selon l'une quelconque des revendications précédentes, **caractérisé en ce que** le volume d'absorption (6) est divisé par des nervures (10) le long de la périphérie, de telle sorte qu'un volume d'absorption compartimenté soit produit.

6. Isolant acoustique selon l'une quelconque des revendications précédentes, **caractérisé en ce que** les dimensions géométriques de la structure microperforée (7) et/ou du volume d'absorption (6) sont adaptées aux fréquences sonores à amortir.
